# FASCICULE DE BREVET EUROPEEN

(11) **EP 0 585 502 B1**
(45) Date de publication et mention de la délivrance du brevet: **04.12.1996**
(21) Numéro de dépôt: 92470023.0
(22) Date de dépôt: 27.08.1992
(51) Int. Cl.: G05B 19/4099

(54) **Procédé pour la création et la réalisation de pièces par C.A.O. et pièces ainsi obtenues**
Verfahren zur Herstellung und Gestaltung von Teilen mit C.A.D. und so erhaltene Teile
Method for the creation and realisation of parts with C.A.D. and parts obtained that way

(43) Date de publication de la demande: 09.03.1994
(73) Titulaire: LABORATOIRE ERIN.MP (Equipes de Recherche en Interface numérique Mécanique et Production), 54500 Vandoeuvre (FR)
(72) Inventeur: Barlier, Claude, 88100 Coinches (FR)
(74) Mandataire: Poupon, Michel

(56) Documents cités:
- EP-A- 0 337 122
- EP-A- 0 369 909
- WO-A-91/12957
- FR-A- 2 673 302
- US-A- 5 023 800
- EUROPEAN MACHINING, JUILLET-AOUT 1992, KINGSTON/THAMES, ENGLAND, GB, pp. 11-15, XP297664; ANNA KOCHAN: 'Rapid Prototyping: The New Way Forward'
- INDUSTRIAL AND PRODUCTION ENGINEERING, vol. 14, no. 2, Juin 1990, München, DE, pp. 43-47, XP179520; HAGEN J.: 'Experience with three-dimensional CAD/CAM in mould and tool making'

## Description

La présente invention a pour objet un procédé pour la création et la réalisation de pièces mécaniques et d'objets à partir d'une conception assistée par ordinateur (C.A.O.). Elle a également pour objet les produits ainsi obtenus.

Des procédés de ce type existent déjà, par exemple EP-A-369 909 et WO-A-91/12957 décrivent des procédés de fabrication d'objet en trois dimensions à partir de logiciels D.A.O./C.A.O./F.A.O. Les objets fabriqués étant des maquettes de visualisation d'objets (par exemple visualisation des volumes).

Ces procédés sont cependant très en retrait des possibilités potentielles des moyens mis en oeuvre à savoir:
- les possibilités actuelles des outils de conception et de fabrication assistés par ordinateur,
- les possibilités des machines-outils (découpe, contournage...) à commande numérique.

Les procédés connus pour concevoir des objets en trois dimensions à partir de logiciels D.A.O./C.A.O./F.A.O. se limitent à la fabrication de maquettes. Aucun procédé ne permet la fabrication de pièces mécaniques proprement dite, à savoir des pièces qui répondent à des fonctions et des sollicitations mécaniques propres.

Or, il existe un réel besoin de conception des pièces mécaniques à partir des fonctions et des sollicitations correspondantes.

L'invention a pour objet de répondre à ce besoin.

On propose à cette fin un procédé pour la création et la réalisation de pièces mécaniques et d'objets à partir d'une conception assistée par ordinateur selon la revendication 1.

Un tel procédé permet essentiellement de concevoir et réaliser des pièces (nouvelles ou existantes) par une conception en couches ou strates. La décomposition est également possible par l'intermédiaire de surfaces non planes (surfaces gauches).

On reprend sur le synoptique annexé, qui doit être compris comme un élément de la description et non comme un schéma, la méthodologie générale du principe de l'invention.

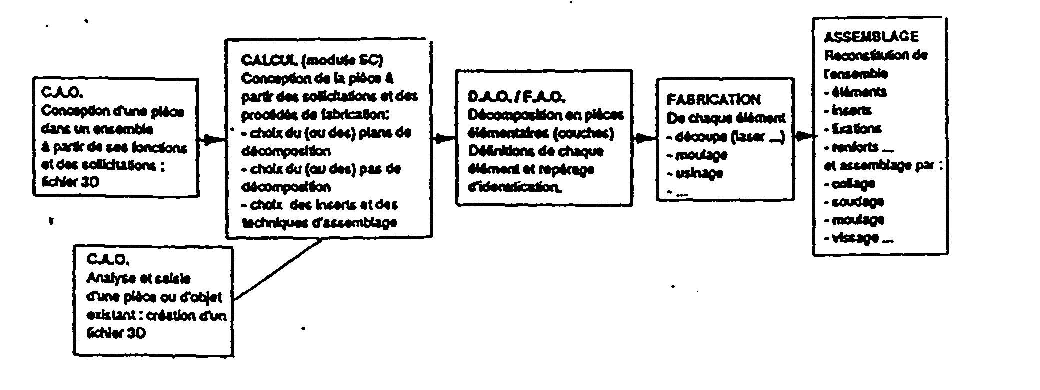

Les intérêts et avantages du procédé de l'invention sont multiples :
- création de pièces à partir des fonctions et des sollicitations,
- création rapide de prototypes, création rapide de pièces de formes complexes, décomposition de pièces de taille important en éléments assemblés, possibilité de création de pièces hétérogènes sans limitation de formes et de matériaux, possibilité d'inserts (pièces, fibres, fils...)
- création de modèles et moules de fonderie ; création de maquettes pour études de stylique,
- possibilité d'organisation de la matière : pièces creuses, etc...
- possibilité de combinaison avec les procédés de moulage (enveloppe SC + moulage...).

Le procédé d'assemblage est également géré par le procédé de l'invention ; il participe à l'obtention des caractéristiques mécaniques globales de la pièce.

Ce procédé permet également la fabrication d'objets à une échelle donnée (plus ou moins grande) à partir d'une maquette à une autre échelle (en général plus petite).

Ce procédé permet la fabrication d'objets artistiques (structures, oeuvres d'art...) de petites ou très grandes tailles, en pièces uniques ou en série. Il offre la possibilité de personnaliser également des objets uniques, par exemple avec dédicace du créateur ou en volumes plus complexes.

Les objets étant décomposés en strates (à partir d'une conception directe C.A.O. ou par reconnaissance d'une maquette puis traitement), ceci permet un montage aisé et un assemblage avec ou sans inserts de renfort.

## Revendications

1. Procédé de réalisation de pièces mécaniques et objets à partir d'une conception assistée par ordinateur comportant les phases successives suivantes :
a) fabrication de pièces en couches élémentaires,
b) reconstitution de l'ensemble des couches élémentaires et introduction éventuelle d'inserts, fixations et renforts,
c) assemblage desdites couches par collage, soudage, moulage ou vissage, certaines parties pouvant rester creuses, la pièce constituée pouvant également servir d'enveloppe au moulage, caractérisé en ce que lesdites couches ou strates, planes ou gauches, sont issues d'une décomposition préalable de la pièce par un module à calcul, à partir des fonctions de la pièce et des sollicitations correspondantes ; cette décomposition comportant les phases de recherche du plan de décomposition, du pas de décomposition, de la forme des inserts et des techniques d'assemblage, lesdites couches ou strates étant obtenues par découpe, par moulage, par usinage.

## Claims

1. Method of achieving mechanical components and objects based on a computer-aided concept, comprising the following successive phases:
a) manufacturing components in elementary layers;
b) reconstituting the assembly of the elementary layers and possibly introducing inserts, attachments and reinforcements; and
c) assembling said layers by gluing, soldering, moulding or screwing, certain parts being able to remain hollow, and the constituted component also being able to serve as a mould casing,
characterised in that said layers or strata, either planar or skew, are produced from a previous decomposition of the component by a computation module, based on the functions of the component and the corresponding applications; this decomposition comprising the research phases of the decomposition plane, of the decomposition step, of the configuration of the inserts and of the assembling techniques, said layers or strata being obtained by cutting, by moulding, by machining.

## Patentansprüche

1. Verfahren zur Herstellung mechanischer Teile und Gegenstände mittels eines rechnerunterstützten Verfahrens, welches die folgenden aufeinanderfolgenden Schritte aufweist:
a) Herstellung von Teilen aus Grundschichten,
b) Zusammenstellung einer Anordnung aus Grundschichten und eventuelles Einfügen von Einsätzen, Halterungen und Verstärkungen,
c) Verbinden der genannten Schichten durch Kleben, Schweißen, Vergießen oder Verschrauben, wobei bestimmte Bereiche hohl bleiben und das erzeugte Teil ebenfalls als Umhüllung beim Gießen dienen kann, **dadurch gekennzeichnet,** daß die genannten ebenen oder verzogenen Schichten oder Lagen aus einer vorangegangenen Unterteilung des Teiles mittels eines Rechenmoduls in Abhängigkeit der Funktionen des Teiles und der entsprechenden Belastung stammen, wobei diese Unterteilung die Phasen der Ermittlung der Ebene der Unterteilung, der Schritte der Unterteilung, der Form der Einsätze und Techniken des Zusammenbaus einschließt und wobei die genannten Schichten oder Lagen durch Abschneiden, durch Gießen oder spanende Formgebung erzeugt wurden.
